# EUROPÄISCHE PATENTANMELDUNG

(11) **EP 1 055 483 A2**
(43) Veröffentlichungstag der Anmeldung: **29.11.2000**
(21) Anmeldenummer: 00110671.5
(22) Anmeldetag: 19.05.2000
(51) Int. Cl.: B23Q 1/01, B23Q 1/58, B23Q 1/72, B23Q 9/00, B23Q 3/02

(54) **Vorrichtung zum Führen eines Bearbeitungsgeräts, insbesondere Führungssystem für Holzbearbeitungsmaschinen und Elektrowerkzeuge**

(30) Priorität: 22.05.1999 DE 19923642
(71) Anmelder: OMEGA Maschinenfabrik GmbH, 72622 Nürtingen (DE)
(72) Erfinder: Reines, Wolfgang, 72664 Kohlberg (DE)
(74) Vertreter: Patentanwälte Bartels und Partner

(57) **Zusammenfassung**

Die Erfindung betrifft eine Vorrichtung zum Führen eines Bearbeitungsgeräts sowie ein Sicherungselement zum Sichern einer Verbindung von Führungsschienen einer erfindungsgemäßen Vorrichtung.

Der Erfindung liegt das Problem zugrunde, eine Vorrichtung zum Führen eines Bearbeitungsgeräts bereitzustellen, bei dem die Führungsschienen präzise fluchtend miteinander verbindbar sind und die gewährleistet, daß die präzise Flucht auch beim Positionieren der Vorrichtung auf dem zu bearbeitenden Werkstück erhalten bleibt.

Das Problem ist dadurch gelöst, daß die Führungsschienen (3) eine Aufnahme (4) für ein die Verbindung sicherndes Sicherungselement (5;105;205;305;405) aufweisen und daß die Aufnahme (4) und das Verbindungselement (2) nebeneinander, insbesondere bezüglich einer parallel zur Längsrichtung (6) verlaufenden Mittelachse (7) der Führungsschienen (3) auf gegenüberliegenden Seiten, angeordnet sind.

## Beschreibung

Die Erfindung betrifft eine Vorrichtung zum Führen eines Bearbeitungsgeräts, insbesondere ein Führungssystem für Holzbearbeitungsmaschinen und Elektrowerkzeuge, gemäß dem Oberbegriff des Anspruchs 1 sowie ein Sicherungselement zum Sichern einer Verbindung von Führungsschienen einer erfindungsgemäßen Vorrichtung.

Die beispielsweise aus dem Katalog 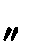 Elektrowerkzeuge · Zimmereimaschinen · Verbindungstechnik" der Karl M. Reich Maschinenfabrik GmbH in D-72622 Nürtingen bekannten gattungsgemäßen Vorrichtungen weisen auf das zu bearbeitende Werkstück auflegbare und das Bearbeitungsgerät führende Führungsschienen auf, die durch Verbindungselemente miteinander verbindbar sind und dadurch eine Verlängerung der Führung in Längsrichtung der Führungsschienen ermöglichen. Das Bearbeitungsgerät ist bei Bedarf in einen Gleitschuh zum Schutz der Oberfläche des zu bearbeitenden Werkstücks einsetzbar. Optionale Schnittführungen sowie Winkel- und Gehrungsanschläge ermöglichen beispielsweise die Vornahme von Gehrungsschnitten. Die Führungsschienen sind ihrerseits auf dem zu bearbeitenden Werkstück festlegbar, beispielsweise unter Verwendung von Schraubzwingen.

Beim Positionieren der aus mehreren Führungsschienen zusammengesetzten Vorrichtung auf dem zu bearbeitenden Werkstück ist darauf zu achten, daß die einzelnen Führungsschienen genau fluchtend aneinander angelegt und miteinander verbunden sind und insbesondere nicht gegeneinander verdreht sind, weil dies die Präzision des Bearbeitungsvorganges herabsetzen würde.

Der Erfindung liegt daher das Problem zugrunde, eine Vorrichtung zum Führen eines Bearbeitungsgeräts bereitzustellen, bei dem die Führungsschienen auf einfache Weise präzise fluchtend miteinander verbindbar sind und die gewährleistet, daß die präzise Flucht auch beim Positionieren der Vorrichtung auf dem zu bearbeitenden Werkstück erhalten bleibt.

Das Problem wird durch die im unabhängigen Anspruch offenbarte Vorrichtung gelöst. Besondere Ausführungsarten der Erfindung sind in den Unteransprüchen offenbart.

Gemäß Anspruch 1 ist das Problem dadurch gelöst, daß die Führungsschienen eine Aufnahme für ein die Verbindung sicherndes Sicherungselement aufweisen und daß die Aufnahme und das Verbindungselement bezüglich einer parallel zur Längsrichtung verlaufenden Mittelachse der Führungsschienen nebeneinander, insbesondere auf gegenüberliegenden Seiten, angeordnet sind. Dadurch wird ein Verdrehen der miteinander verbundenen Führungsschienen zueinander auch beim Verschieben der Vorrichtung oder beim Transport zuverlässig verhindert. Vorzugsweise weisen das Verbindungselement und das Sicherungselement einen Abstand auf, der größer als die Hälfte der Breite der Führungsschienen ist, insbesondere ist das Sicherungselement und/oder das Verbindungselement nahe dem die Längsseite der Führungsschiene bildenden Rand angeordnet. Die Führungsschienen können außerdem eine linealförmige Teilung bzw. Skalierung aufweisen.

Dadurch, daß die Aufnahme das Sicherungselement derart aufnimmt, daß dieses im eingelegten Zustand nicht über die Oberfläche der Führungsschiene hinausragt, ist die bekannte Führung des Bearbeitungsgeräts nicht behindert und kann insbesondere unverändert übernommen werden. Außerdem besteht kein Verletzungsrisiko für den Anwender durch das Sicherungselement.

Dadurch, daß die Aufnahme durch eine Nut gebildet ist, insbesondere durch eine sich über die gesamte Länge der Führungsschiene erstreckende hinterschnittene Nut mit einem vorzugsweise schwalbenschwanzähnlichen Querschnitt, ist ein einfaches Einlegen und gleichzeitig eine präzise Ausrichtung der miteinander zu verbindenden Führungsschienen auch hinsichtlich eines möglichen Verdrehens der Führungsschienen gewährleistet. Eine hinterschnittene Nut, beispielsweise in Form eines Schwalbenschwanzes, bietet zudem den Vorteil, daß das Sicherungselement nicht unbeabsichtigt aus der Nut herausfallen kann. Das Lösen der Wirkverbindung erfolgt vorzugsweise von der Ober- und/oder Unterseite der Vorrichtung.

Dadurch, daß das Sicherungselement mindestens abschnittsweise formschlüssig mit der Aufnahme zusammenwirkt, ist die Präzision der Verbindung weiter erhöht. Der Formschluß ist beispielsweise durch von einem Abschnitt des Sicherungselements gebildete Seitenflächen realisierbar, die an den entsprechenden Seitenflächen der Nut in Anlage sind. Das Auslenken des Sicherungselements erfolgt vorzugsweise senkrecht zur Oberfläche der Vorrichtung. Der zweite Abschnitt des Sicherungselements ist dabei in der Führungsschiene, insbesondere in der Nut, gehalten und bildet eine im wesentlichen feste Einspannung in Bezug auf die Auslenkung.

Dadurch, daß die Aufnahme mit dem Sicherungselement zusammenwirkende und ein Verrasten des in die Aufnahme eingelegten Sicherungselements bewirkende Rastmittel aufweist, ist eine dauerhaft präzise Positionierung des Sicherungselements in der Aufnahme gewährleistet. Die Mittel zum Verrasten sind vorzugsweise an einem zweiten Abschnitt des Sicherungselements angeordnet, der sich an den die Führung in und/oder den Formschluß mit der Aufnahme bereitstellenden ersten Abschnitt des Sicherungselements anschließt. Die Aufnahme kann beispielsweise eine Bohrung aufweisen, in die eine sphärische, zylindrische, konische oder anderweitig geeignete Ausprägung des Sicherungselements ein rastbar ist.

Alternativ oder ergänzend zu einer Ausprägung ist insbesondere bei der Verwendung eines Sicherungselements aus einem federelastischen Werkstoff, beispielsweise aus Federstahl, die mit der Aufnahme rastend zusammenwirkende Ausformung auch durch ein auf dem Sicherungselement festgelegtes, beispielsweise aufgeklebtes, aufgelötetes oder aufgeschweißtes Rastelement bildbar. Dadurch lassen sich scharfkantige Übergänge im Bereich des Überganges vom Sicherungselement zum Rastelement und dadurch hohe Rastkräfte erzielen.

Das Rastelement wirkt dabei zumindest teilweise formschlüssig mit der Aufnahme zusammen, beispielsweise greift eine vorzugsweise durch Stanzen hergestellte Rastelementscheibe in eine entsprechende Bohrung der Aufnahme ein. Alternativ dazu können auch Steg- oder kreuzartige Ausformungen des Sicherungselements mit entsprechenden Bohrungen oder Einprägungen in der Aufnahme rastend zusammenwirken.

Dadurch, daß die Führungsschienen aneinander anstoßend miteinander verbindbar sind und daß die Stoßebene eine Symmetrieebene für die Aufnahmen des Sicherungselements bildet, sind symmetrische Sicherungselemente einsetzbar, wodurch das Verbinden der Führungsschienen weiter vereinfacht ist. Bei entsprechender Ausgestaltung der an den Sicherungselementen vorgesehenen Rastmittel weisen die Sicherungselemente eine Achsen- oder sogar eine Punktsymmetrie auf.

Dadurch, daß die Führungsschienen an den erforderlichen Stellen eine weichelastische Oberfläche aufweisen, wird die Oberfläche des zu bearbeitenden Werkstücks zuverlässig geschont, insbesondere ein Verkratzen verhindert, und dadurch das präzise Verbinden der Führungsschienen weiter vereinfacht. Die weichelastische Oberfläche kann beispielsweise durch aufgeklebte handelsübliche Moosgummistreifen bereitgestellt werden.

Dadurch, daß die Führungsschienen eine weitere Aufnahme für das Verbindungselement aufweisen, ist die Zuverlässigkeit und Präzision der Verbindung weiter erhöht. Vorzugsweise bildet die weitere Aufnahme den Führungssteg für die Anlage des Bearbeitungsgeräts. Die Verbindungselemente können in der weiteren Aufnahme festlegbar sein, beispielsweise federverrastbar, verstiftbar oder verschraubbar sein.

Beispielsweise können die Verbindungselemente eine über ihre Anlagefläche hinausstehende, federkraftbelastete Kugel aufweisen, die in eine entsprechende Ausnehmung in der weiteren Aufnahme einrasten.

Dadurch, daß die Aufnahme und die weitere Aufnahme auf vorzugsweise gegenüberliegenden Flächen der Führungsschiene offen sind, sind während des Betriebs in die Aufnahmen eingedrungene Verunreinigungen leicht entfernbar. Beispielsweise kann die weitere Aufnahme für die Verbindungselemente zu der auf das Werkstück gerichteten Unterseite der Führungsschiene offen sein, wogegen die Aufnahme für das Sicherungselement nach oben hin offen ist. Sofern das Verbindungselement eine größere Länge als das Sicherungselement aufweist, können die Führungsschienen zunächst mittels des Verbindungselements zusammengeführt werden und anschließend erst das Sicherungselement auf der Oberseite der Führungsschienen eingesetzt werden.

Dadurch, daß in oder an der weiteren Aufnahme auch beispielsweise eine Schraubzwinge ein- bzw. ansetzbar ist, ist die Vorrichtung ohne zusätzliche Elemente auf dem zu bearbeitenden Werkstück festlegbar.

Die Erfindung betrifft auch ein Sicherungselement gemäß Anspruch 10 zum Sichern einer Verbindung von Führungsschienen der vorstehend beschriebenen Vorrichtung. Die mit der Aufnahme korrespondierende Form der Sicherungselemente verhindert zuverlässig ein Verdrehen der Führungsschienen zueinander.

Weitere Vorteile, Merkmale und Einzelheiten der Erfindung ergeben sich aus den Unteransprüchen sowie der nachfolgenden Beschreibung, in der unter Bezugnahme auf die Zeichnungen ein Ausführungsbeispiel im einzelnen beschrieben ist. Dabei können die in den Ansprüchen und in der Beschreibung erwähnten Merkmale jeweils einzeln für sich oder in beliebiger Kombination erfindungswesentlich sein.
- Fig. 1: zeigt eine Aufsicht auf eine erfindungsgemäße Vorrichtung,
- Fig. 2: zeigt eine Seitenansicht der Vorrichtung der Fig. 1,
- Fig. 3: zeigt eine Aufsicht auf das in der Fig. 1 dargestellte Sicherungselement,
- Fig. 4: zeigt eine Seitenansicht des Sicherungselements der Fig. 3,
- Fig. 5: zeigt eine zweite Ausführungsform des Sicherungselements,
- Fig. 6: zeigt eine dritte Ausführungsform des Sicherungselements,
- Fig. 7: zeigt eine vierte Ausführungsform des Sicherungselement,
- Fig. 8: zeigt eine fünfte Ausführungsform des Sicherungselements und
- Fig. 9: zeigt eine Seitenansicht des Sicherungselements der Fig. 8.

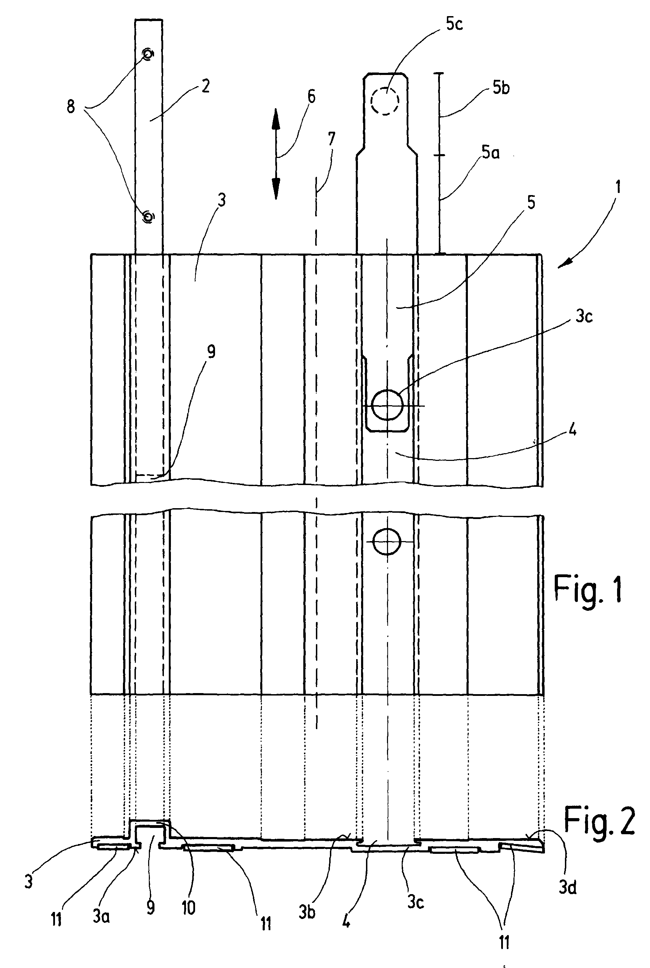

Die Fig. 1 zeigt eine Aufsicht auf eine erfindungsgemäße Vorrichtung zum Führen eines (nicht dargestellten) Bearbeitungsgeräts, insbesondere ein Führungssystem (1) für Holzbearbeitungsmaschinen und Elektrowerkzeuge, mit durch ein Verbindungselement 2 miteinander verbindbaren, insbesondere zusammensteckbaren, und das Bearbeitungsgerät führenden Führungsschienen 3 und einer Aufnahme 4 für ein die Verbindung sicherndes Sicherungselement 5, die bezüglich einer parallel zur Längsrichtung 6 verlaufenden Mittelachse 7 der Führungsschiene 3 auf einer dem Verbindungselement 2 gegenüberliegenden Seite angeordnet ist. Das Verbindungselement 2 ist ein im wesentlichen zylindrischer langgestreckter Körper mit einem rechteckförmigen oder quadratischen Querschnitt und weist Gewindebohrungen 8 auf, mittels derer er an der Führungsschiene 3 festlegbar ist. Das Verbindungselement 2 ist in eine weitere Aufnahme 9 der Führungsschiene 3 einlegbar bzw. einführbar.

Die Aufnahme 4 für das Sicherungselement 5 und die weitere Aufnahme 9 für das Verbindungselement 2 sind jeweils nutenförmig ausgeführt und erstrecken sich in Längsrichtung durchgehend von einem Ende zum gegenüberliegenden Ende der Führungsschiene 3.

Das Sicherungselement 5 weist auf jeder seiner Hälften zunächst einen ersten mittigen Abschnitt 5a auf, der formschlüssig mit der Aufnahme 4 zusammenwirkt. Daran schließt sich ein zweiter endseitiger Abschnitt 5b an, der ein Rastmittel in Form einer in der Draufsicht kreisförmigen Ausformung 5c trägt, das rastend in eine Ausnehmung, insbesondere eine Bohrung 3c der Führungsschiene 3 einrastet. Die Rastkraft wird durch den laschenförmigen zweiten endseitigen Abschnitt 5b des Sicherungselements 5 bereitgestellt, der senkrecht zur Zeichenebene der Fig. 1 federnd gegenüber dem ersten muffigen Abschnitt 5a auslenkbar ist, insbesondere aus der nutenförmigen Ausnehmung 4 auslenkbar ist.

Die Fig. 2 zeigt eine Seitenansicht der Vorrichtung der Fig. 1. Die weitere Aufnahme 9 für das (nicht dargestellte) Verbindungselement 2 ist im wesentlichen rechteckförmig und auf der auf das (nicht dargestellte) zu bearbeitende Werkstück gerichteten Oberfläche 3a der Führungsschiene 3 offen. Die weitere Aufnahme 9 ist durch ein entsprechend geformtes Profil gebildet und bildet einen Führungssteg 10 zur Führung des (nicht dargestellten) Bearbeitungsgeräts. Demgegenüber ist die Aufnahme 4 für das (in der Fig. 2 nicht dargestellte) Sicherungselement 5 zwar ebenfalls im wesentlichen rechteckig, aber langgestreckt flach ausgebildet und nach der vom Werkstück abgewandten Fläche 3b der Führungsschiene 3 hin offen. Sowohl die Aufnahme 4 als auch die weitere Aufnahme 9 weisen in Bezug auf Ihre Öffnungen einen Hinterschnitt auf, der eine sichere Führung des Sicherungs- bzw. Verbindungselements gewährleistet. Auf der dem Werkstück zugewandten Fläche 3a sind Moosgummistreifen 11 aufgebracht zum Schutz der Oberfläche des zu bearbeitenden Werkstücks. Auf der zum Rand hin abgeschrägten Seitenfläche 3d kann die Führungsschiene 3 eine Skala aufweisen, die beispielsweise aufgedruckt oder eingeprägt ist.

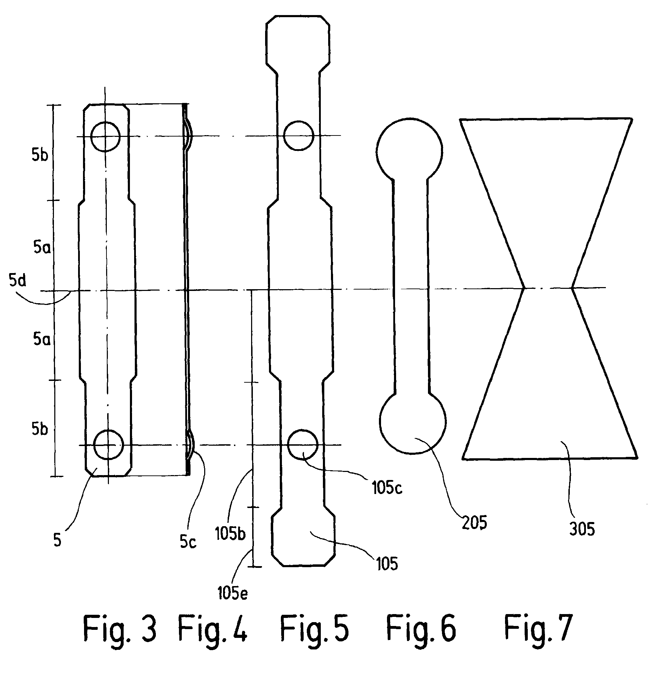

Die Fig. 3 zeigt eine Aufsicht auf das in der Fig. 1 dargestellte Sicherungselement 5, das symmetrisch zur Mittelebene 5d ist und auf jeder Seite einen ersten mittleren Abschnitt 5a und einen zweiten endseitigen Abschnitt 5b aufweist.

Die Fig. 4 zeigt eine Seitenansicht des Sicherungselements der Fig. 3. Die sphärischen Auswölbungen 5c wirken als Rastmittel mit den (in der Fig. 1 dargestellten) Bohrungen 3c der Führungsschienen 3 zusammen und gewährleisten eine sichere und exakte Positionierung der Sicherungselemente 5 in Bezug auf die Führungsschienen 3 und damit der miteinander verbundenen Führungsschienen 3 untereinander. Typische Abmessungen für das Sicherungselement sind eine Länge von 144 mm, ein Abstand der Ausformungen 5c von 120 mm, eine Länge des ersten mittleren Abschnitts 5a von 35 mm, eine Breite im ersten mittleren Abschnitt 5a von 22 mm, eine Breite im zweiten endseitigen Abschnitt von 18 mm und ein Durchmesser der Ausformung 5c von 12 mm. Die Ausformung 5c steht typischerweise etwa 1,5 bis 2 mm über der Oberfläche des Sicherungselements 5 über, dessen Dicke beträgt typisch zwischen 0,8 und 1 mm.

Die Fig. 5 zeigt eine zweite Ausführungsform des Sicherungselements 105, bei dem sich an den zweiten Abschnitt 105b ein dritter endseitiger Abschnitt 105e anschließt, der wiederum in der in der Fig. 1 dargestellten Aufnahme 4 der Führungsschiene 1 geführt ist, und dadurch die Rastkraft des Rastmittels 105c weiter erhöht, und dessen Breite der Breite des ersten mittleren Abschnitts entspricht.

Die Fig. 6 zeigt eine dritte Ausführungsform des Sicherungselements 205, bei der ebenso wie bei der in der Fig. 7 gezeigten vierten Ausführungsform des Sicherungselements 305 die Sicherungselemente formschlüssig mit den entsprechenden Aufnahmen in der Führungsschiene zusammenwirken. Wie die Ausführungsformen der Fig. 6 und 7 zeigen, sind nahezu beliebige Formgestaltungen möglich, wesentlich ist jeweils, daß durch die Sicherungselemente 5 allein oder in Zusammenwirkung mit dem Verbindungselement 2 eine Verdrehsicherung der miteinander zu verbindenden Führungsschienen 3 in der durch diese gebildeten Ebene gewährleistet ist. In der Regel ist das Verbindungselement 2 und das Sicherungselement 205, 305 dabei je zur Hälfte in entsprechende Aufnahmen 4 der miteinander zu verbindenden Führungsschienen 3 einlegbar.

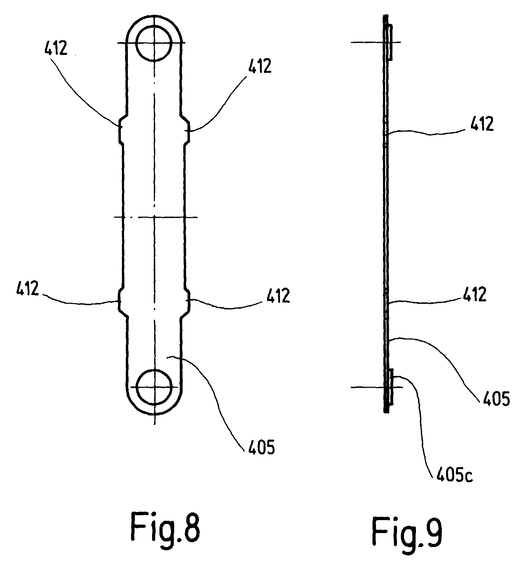

Die Fig. 8 zeigt eine fünfte Ausführungsform des Sicherungselements 405 mit abgerundeten Endabschnitten. Die dem jeweiligen Endabschnitt zugewandten Enden des mittleren Abschnitts weisen fahnenförmige Verbreiterungen 412 auf, die jeweils in die Hinterschneidungen der Aufnahme 4 eingreifen. Im Unterschied zu dem Sicherungselement 5 der Figuren 3 und 4 weist die fünfte Ausführungsform 405 kreiszylinderförmige Ausformungen 405c auf, die durch ausgestanzte und auf das Sicherungselement 405 aufgeschweißte, aufgelötete oder aufgeklebte kreiszylinderförmige Scheiben gebildet sind, vorzugsweise aus Stahl.

## Patentansprüche

1. Vorrichtung zum Führen eines Bearbeitungsgeräts, insbesondere Führungssystem (1) für Holzbearbeitungsmaschinen und Elektrowerkzeuge, mit durch ein Verbindungselement (2) miteinander verbindbaren und das Bearbeitungsgerät führende Führungsschienen (3), **dadurch gekennzeichnet**, daß die Führungsschienen (3) eine Aufnahme (4) für ein die Verbindung sicherndes Sicherungselement (5; 105; 205; 305) aufweisen und daß die Aufnahme (4) und das Verbindungselement (2) nebeneinander, insbesondere bezüglich einer parallel zur Längsrichtung (6) verlaufenden Mittelachse (7) der Führungsschienen (3) auf gegenüberliegenden Seiten, angeordnet sind.

2. Vorrichtung nach Anspruch 1, dadurch gekennzeichnet, daß die Aufnahme (4) das Sicherungselement (5; 105; 205; 305) derart aufnimmt, daß dieses im die Verbindung sichernden Zustand nicht über die Oberfläche (3b) der Führungsschiene (3) hinausragt.

3. Vorrichtung nach Anspruch 1 oder 2, dadurch gekennzeichnet, daß die Aufnahme (4) durch eine Nut gebildet ist, insbesondere durch eine sich über die gesamte Länge der Führungsschiene (3) erstreckende hinterschnittene Nut mit einem vorzugsweise schwalbenschwanzähnlichen Querschnitt, und daß die Führungsschiene (3) eine Wirkfläche aufweist, die mit Rastmitteln des Sicherungselements (5; 105; 205; 305; 405) lösbar in Wirkverbindung bringbar ist.

4. Vorrichtung nach Anspruch 3, dadurch gekennzeichnet, daß die Aufnahme (4) derart ausgestaltet ist, daß beim Einrasten der Rastmittel ein zweiter Abschnitt (5b; 105b) des Sicherungselements (5; 105; 205; 305; 405) gegenüber einem in der Aufnahme (4) geführten ersten Abschnitt (5a; 105e) des Sicherungselements (5; 105; 205; 305; 405) quer zur Längsrichtung (6) auslenkbar ist.

5. Vorrichtung nach einem der Ansprüche 3 oder 4, dadurch gekennzeichnet, daß die Wirkfläche der Führungsschiene (3) durch eine Bohrung (3c) gebildet ist, in die eine das Rastmittel bildende Ausformung (15) des Sicherungselements (5; 105; 205; 305; 405) einrastbar ist.

6. Vorrichtung nach einem der Ansprüche 1 bis 5, dadurch gekennzeichnet, daß die Führungsschienen (3) aneinander anstoßend miteinander verbindbar sind und daß die Stoßebene eine Symmetrieebene für die Aufnahmen (4) des Sicherungselements (5; 105; 205; 305; 405) der beiden aneinander stoßenden Führungsschienen (3) bildet.

7. Vorrichtung nach einem der Ansprüche 1 bis 6, dadurch gekennzeichnet, daß die Führungsschienen (3) auf ihrer einem zu bearbeitenden Werkstück zugewandten Fläche (3a) mindestens partiell eine weichelastische Oberfläche aufweisen, insbesondere eine Moosgummi-Auflage (11) aufweisen.

8. Vorrichtung nach einem der Ansprüche 1 bis 7, dadurch gekennzeichnet, daß die Führungsschienen (3) eine weitere Aufnahme (9) für das Verbindungselement (2) aufweisen, und daß die weitere Aufnahme (9) einen Führungssteg (10) für die Anlage des Bearbeitungsgeräts bildet.

9. Vorrichtung nach Anspruch 8, dadurch gekennzeichnet, daß die Aufnahme (4) für das Sicherungselement (5; 105; 205; 305; 405) und die weitere Aufnahme (9) für das Verbindungselement (2) auf vorzugsweise einander gegenüberliegenden Flächen (3a, 3b) der Führungsschiene (3) offen sind.

10. Sicherungselement (5; 105; 205; 305; 405) zum Sichern einer Verbindung von Führungsschienen (3) einer Vorrichtung nach einem der Ansprüche 1 bis 9, dadurch gekennzeichnet, daß das Sicherungselement (5; 105; 205; 305; 405) Rastmittel aufweist, die lösbar in Wirkverbindung mit der Führungsschiene (3) bringbar sind und dadurch die Verbindung zwischen den Führungsschienen (3) sichert, insbesondere ein Verdrehen der Führungsschienen (3) gegeneinander verhindert.

11. Sicherungselement (5; 105; 205; 305; 405) nach Anspruch 10, dadurch gekennzeichnet daß ein die Rastmittel tragender zweiter Abschnitt (5b; 105b) gegenüber einem ersten Abschnitt (5a; 105e) des Sicherungselements (5; 105; 205; 305; 405) federnd auslenkbar ist.

12. Sicherungselement nach Anspruch 10 oder 11, dadurch gekennzeichnet, daß das Sicherungselement (5; 105; 205; 305; 405) ein langgestreckter flacher Blechstreifen ist, der je etwa zur Hälfte in die beiden Aufnahmen (4) der zu verbindenden Führungsschienen (3) einlegbar ist und der bezüglich seiner quer zu einer Längsachse verlaufenden Mittelebene (5d) symmetrisch ist.
